# EUROPÄISCHE PATENTSCHRIFT

(11) **EP 1 384 622 B1**
(45) Veröffentlichungstag und Bekanntmachung des Hinweises auf die Patenterteilung: **16.02.2005**
(21) Anmeldenummer: 03013147.8
(22) Anmeldetag: 11.06.2003
(51) Int. Cl.: B60Q 1/04

(54) **Leuchteinheit und Verfahren zum Befestigen einer Leuchteinheit**
Lighting unit and method for mounting a lighting unit
Ensemble d'eclairage et procede de fixation d'un ensemble d'eclairage

(30) Priorität: 27.07.2002 DE 10234224
(43) Veröffentlichungstag der Anmeldung: 28.01.2004
(73) Patentinhaber: Hella-Behr Fahrzeugsysteme GmbH, 59552 Lippstadt (DE); Hella KGaA Hueck & Co., 59552 Lippstadt (DE)
(72) Erfinder: Hemmersmeier, Ralf, Dipl.-Ing., 59557 Lippstadt (DE); Kersting, Dirk, 59555 Lippstadt (DE); Braun, Dieter, Dipl.-Ing., 33378 Rheda-Wiedenbrück (DE); Seiger, Ralf, Dipl.-Ing., 59556 Lippstadt (DE); Röhr, Norbert, Dipl.-Ing., 59555 Lippstadt (DE); Derckum, Jörg, 59590 Geseke (DE)
(74) Vertreter: Ostermann, Thomas, Dipl.-Ing.

(56) Entgegenhaltungen:
- EP-A- 0 933 253
- DE-A- 3 523 384
- DE-U- 29 724 220

## Beschreibung

Die Erfindung betrifft eine Leuchteinheit für Fahrzeuge nach dem Oberbegriff des Patenanspruchs 1.

Ferner betrifft die Erfindung ein Verfahren zum Befestigen einer Leuchteinheit an einem Karosserieteil nach dem Oberbegriff des Patenanspruchs 9.

Aus der DE 40 20 364 C2 ist eine Leuchteinheit für Fahrzeuge bekannt, bei der am Rand des Gehäuses Befestigungselemente vorgesehen sind zur Befestigung desselben an einem Karosserieteil des Kraftfahrzeugs. Die Befestigungselemente des Gehäuses einerseits und das Karosserieteil andererseits werden durch Schrauben, Löcher bzw. Gewindebuchsen gebildet, so dass eine kraftschlüssige Verbindung der Leuchteinheit an dem Kraftfahrzeug ermöglicht wird. Zur Erleichterung der Montage weist das Scheinwerfergehäuse an einer Haltelasche eine Anschlagfläche auf, mittels derer sie gegen einen Anschlag des Karosserieteils anlegbar ist. Hierdurch kann ein relativ zeitaufwendiges Einstellen oder Justieren des Scheinwerfergehäuses in Bezug zu dem Karosserieteil entfallen.

Nachteilig an der bekannten Leuchteinheit ist, dass an den mit den Anschlagflächen beaufschlagten Befestigungspunkten jeweils eine Festlegung nur in eine Richtung, nämlich senkrecht zur Befestigungs- bzw. Schraubenachse des Befestigungselementes, gegeben ist. Es sind daher weitere Maßnahmen erforderlich, um das Scheinwerfergehäuse in die vorgegebene Ansatzposition zu dem Karosserieteil zu verbringen.

Aus der Druckschrift DE 35 23 384 A1 ist eine Leuchteinheit für Fahrzeuge mit einem Gehäuse bekannt, das in mindestens drei zueinander beabstandeten Befestigungspunkten mit einem Karosserieteil verbunden ist. Ein erster Befestigungspunkt ist als Fixpunkt in Verbindung mit den anderen Befestigungspunkten ausgebildet. Ein zweiter Befestigungspunkt ermöglicht ein Verschwenken der Leuchteinheit um eine horizontale Achse. Ein dritter Befestigungspunkt ist als Kugel-Pfanne-verbindung ausgebildet und erstreckt sich mit dem zweiten Befestigungspunkt in einer gemeinsamen horizontalen Ebene. Zum Toleranzausgleich sind der zweite Befestigungspunkt und der dritte Befestigungspunkt auf die Einstellbarkeit in lediglich eine einzige Richtung beschränkt.

Die Druckschrift EP 0 933 253 A2 offenbart eine Leuchteinheit für Fahrzeuge, die über keinen Fixpunkt mit einem Karosserieteil verbunden ist. Ein erster Befestigungspunkt ist um einen Bolzen schwenkbar bzw. in einem Längsloch horizontal verschiebbar angeordnet. Ein zweiter Befestigungspunkt ist in horizontaler Richtung verschiebbar ausgebildet. Ein dritter Befestigungspunkt ist als Kugel-Pfannen-Verbindung ausgebildet und daher schwenkbar gelagert, so dass er nicht als Fixpunkt anzusehen ist.

Die Druckschrift DE 297 24 220 U1 offenbart eine Leuchteinheit, die über einen ersten Fixpunkt und einen zweiten Fixpunkt verfügt, über die das Gehäuse der Leuchteinheit an einem Karosserieteil befestigt ist. Weiterhin ist ein dritter bzw. vierter Befestigungspunkt vorgesehen, der auf Grund der vertikalen Elastizität der Haltelaschen lediglich einen vertikalen Toleranzausgleich ermöglicht.

Aufgabe der vorliegenden Erfindung ist es daher, eine Leuchteinheit für Fahrzeuge bzw. ein Verfahren zum Befestigen einer Leuchteinheit an einem Karosserieteil eines Fahrzeugs anzugeben, so dass die Montage bzw. das Justieren des Gehäuses an dem Karosserieteil verbessert wird.

Zur Lösung dieser Aufgabe weist die Erfindung die Merkmale des Patentanspruchs 1 auf.

Der besondere Vorteil der Erfindung besteht darin, dass lediglich durch die Ausbildung eines einzigen Befestigungspunktes als Fixpunkt eine eindeutige Relativlage des gesamten Gehäuses zu dem Karosserieteil in der Ansatzposition bewirkt wird. Die Relativlagen der weiteren Befestigungspunkte ist dadurch eindeutig festgelegt. Die Erfindung ermöglicht durch die Ausbildung eines ersten Befestigungspunktes als Fixpunkt ein gezieltes Verbringen des Gehäuses in die Ansatzposition, und zwar unabhängig von der Ausbildung des Gehäuses bzw. des Karosserieteils an den weiteren Befestigungspunkten. Erfindungsgemäß sind ein zweiter und ein dritter Befestigungspunkt vorgesehen, wobei der zweite Befestigungspunkt Mittel zum Toleranzausgleich entlang einer vorgegebenen Achse und der dritte Befestigungspunkt Mittel zum Toleranzausgleich entlang von zwei senkrecht zueinander angeordneten Achsen aufweist.

Nach einer bevorzugten Ausführungsform der Leuchteinheit erfolgt die Ansatzbewegung des Gehäuses an das Karosserieteil entlang eines durch die Geometrie der Festlegelemente des Fixpunktes vorgegebenen Führungsweges, so dass eine eindeutige Positionierung des Gehäuses in der Ansatzposition begünstigt wird. Vorteilhaft weist ein zweiter Befestigungspunkt ein weiteres Festlegelement auf, so dass eine geführte Bewegung des Gehäuses in die Ansatzposition gewährleistet ist.

Nach einer Weiterbildung der Leuchteinheit sind mindestens ein zweiter und ein dritter Befestigungspunkt vorgesehen, die jeweils Mittel zum Toleranzausgleich entlang einer vorgegebenen Achse aufweisen. Auf diese Weise können Toleranzen des Karosserieteils und/oder des Gehäuses ausgeglichen werden.

Nach einer Weiterbildung der Leuchteinheit ist das dem Fixpunkt zugeordnete Festlegelement in der Nähe von Vorzugskanten des Gehäuses und/oder des Karosserieteils angeordnet, so dass der Aufwand für die Fertigungsgenauigkeit von Gehäuse und Karosserieteil beschränkt werden kann. Die Vorzugskanten der Bauteile zeichnen sich dadurch aus, dass sie die geringsten Fertigungstoleranzen aufweisen.

Nach einer Weiterbildung der Leuchteinheit ist ein Festlegelement des Karosserieteils als ein Stift ausgebildet, der in eine als Festlegelement fungierende Bohrung eingreifbar ist. Hierdurch kann auf einfache Weise ein geführte Ansatzbewegung erzielt werden.

Nach einer Weiterbildung der Leuchteinheit ist ein Festlegelement in ein Befestigungselement integriert ausgebildet, so dass eine Festlegung und Befestigung mit geringem Fertigungsaufwand an einem Befestigungspunkt realisiert werden kann.

Zur Lösung dieser Aufgabe weist das erfindungsgemäße Verfahren die Merkmale des Patenanspruchs 9 auf.

Der Vorteil des erfindungsgemäßen Verfahrens besteht insbesondere darin, dass gleichzeitig mit dem Verbringen des Gehäuses in die Ansatzposition ein Befestigungsvorgang desselben durchgeführt wird. Der Befestigungsvorgang beginnt mit dem Aufsetzen und Verschieben der korrespondierenden Festlegelemente zueinander und schließt mit Erreichen der Endstellung der Festlegelemente in der Ansatzposition ab. Durch das gleichzeitige Festlegen und Befestigen kann die Montagezeit wesentlich reduziert werden.

Nach einer Weiterbildung des erfindungsgemäßen Verfahrens erfolgt eine geführte Bewegung des Gehäuses in die Ansatzposition, so dass zielgerichtet eine eindeutige Ansatzposition eingenommen werden kann.

Ein Ausführungsbeispiel der Erfindung wird nachfolgend anhand einer Zeichnung beschrieben.

Es zeigt:
- Figur: eine perspektivische Vorderansicht eines Scheinwerfergehäuses, das in einer Ansatzposition an ein Karosserieteil verbracht wird.

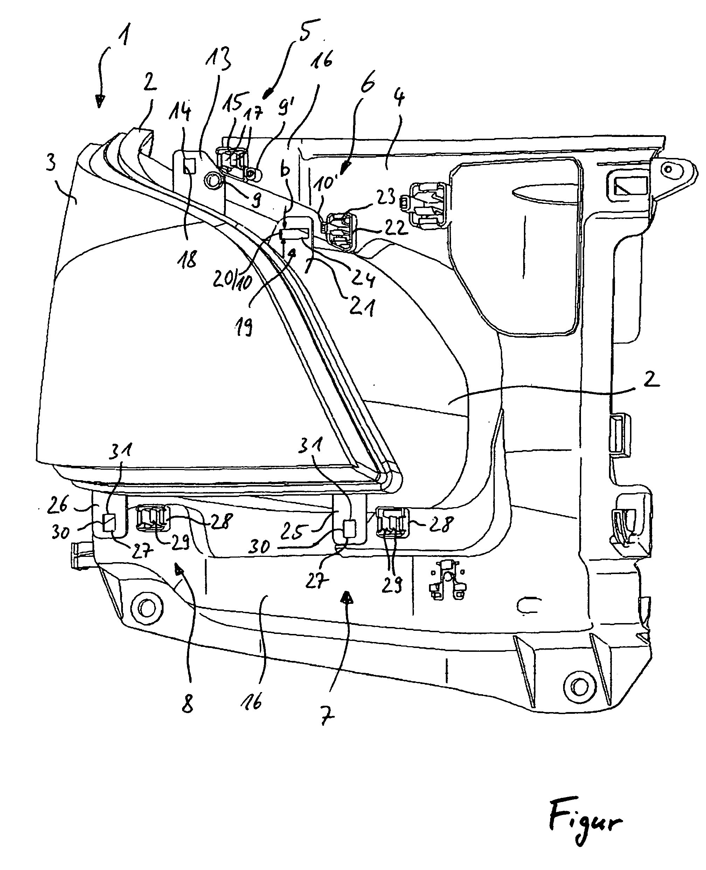

In der Figur ist eine Leuchteinheit 1 dargestellt, die als ein Scheinwerfer für Kraftfahrzeuge ausgebildet ist. Der Scheinwerfer weist ein Gehäuse 2 und eine sich an den Rand des Gehäuses 2 anschließende optiklose Abdeckscheibe 3 auf, die zusammen eine Leuchtenkammer bilden, in der eine nicht dargestellte Lichtquelle und ein Reflektor angeordnet sind.

Zur Befestigung der Leuchteinheit 1 an einem Karosserieteil 4 des Kraftfahrzeugs sind insgesamt vier Befestigungspunkte 5, 6, 7, 8 vorgesehen. Das Karosserieteil 4 kann als Fahrzeugteil oder als ein Montageträger eines Frontends ausgebildet sein. Die Befestigungspunkte 5, 6, 7, 8 sind derart ausgebildet, dass eine Montage des Scheinwerfers ohne Ausrichtarbeiten erfolgen kann. Zu diesem Zweck sind den Befestigungspunkten 5, 6, 7, 8 jeweils Festlegelemente 9, 10, 11, 12 zugeordnet, die eine präzise Fixierung des Gehäuses 2 an dem Karosserieteil 4 ermöglichen.

An einem ersten Befestigungspunkt 5 weist das Gehäuse 2 ein abragende Lasche 13 auf, an der zum einen ein Befestigungselement 14 und zum anderen das Festlegelement 9 ausgebildet sind. Das Befestigungselement 14 ist als eine rechteckförmige Aufnahme ausgebildet, die mit einem an dem Karosserieteil 4 angeordneten Rastelement 15 zusammenwirkt. Das Festlegelement 9 ist als kreisrunde Bohrung ausgebildet, die mit einem an dem Karosserieteil 4 angeformten Stift 9' als Festlegelement zusammenwirkt. Der Durchmesser der Bohrung 9 ist auf den Außendurchmesser des Stiftes 9' abgestimmt, so dass nach dem Anlegen der Lasche 13 an das Karosserieteil 4 eine Verschiebung der Lasche 13 lediglich entgegen der Ansatzbewegungsrichtung möglich ist. Die Ansatzbewegungsrichtung erfolgt zumindest nach dem Anlegen der Bohrung 9 an dem freien Ende des Stiftes 9' entlang eines mit der Achse des Stiftes 9' korrespondierenden Führungsweges. Die Ansatzposition der Lasche 13 ist erreicht, sobald die Lasche 13 an einer Grundfläche 16 des Karosserieteils 4 zur Anlage kommt. Während der Ansatzbewegung wird selbsttätig das Rastelement 15 des Karosserieteils 4 an die Aufnahme 14 des Gehäuses 2 geführt, so dass bei Erreichen der Ansatzposition eine Rast- oder Clipsverbindung zwischen der Lasche 13 und dem Karosserieteil 4 vorliegt.

Aufgrund der geometrischen Anordnung der Festlegelemente 9, 9' ist der erste Befestigungspunkt 5 als ein Fixpunkt ausgebildet, da nach dem Erreichen der Ansatzposition die Lasche 13 unverschieblich angeordnet ist. Sie kann lediglich durch Lösen der Rastverbindung entgegen der Ansatzbewegungsrichtung zur Demontage bewegt werden. Zur Montage wird die Relativposition zwischen dem Gehäuse 2 einerseits und dem Karosserieteil 4 andererseits durch die Anordnung der Festlegelemente 9, 9' bestimmt. In der Ansatzposition ist die Lasche 13 und somit das Gehäuse 2 eindeutig fixiert, ohne dass sich eine Einstellung bzw. Justierung anschließen müsste.

Da der erste Befestigungspunkt 5 (Fixpunkt) die höchste Fertigungsgenauigkeit der Bauteile 2, 4 erfordert, sollte der Fixpunkt 5 vorzugsweise in der Nähe von Vorzugskanten angeordnet sein, die mit einer relativ geringen Toleranz herstellbar sind. Im vorliegenden Ausführungsbeispiel ist der Fixpunkt 5 einer einer nicht dargestellten Motorhaube zugewandten Wand des Karosserieteils 4 zugeordnet. Alternativ kann der Fixpunkt 5 auch an einer einem nicht dargestellten Kotflügel zugewandten Vorzugskante angeordnet sein.

Das Rastelelement 15 des ersten Befestigungspunktes 5 wird durch zwei um eine Vertikalachse federnd ausgebildete Rasthaken gebildet, die in der Ansatzposition und nach vorliegendem Ausführungsbeispiel auch in der Montageposition vertikale Kanten 18 der Aufnahme 14 hintergreifen.

Ein zweiter Befestigungspunkt 6 ist beabstandet zu dem ersten Befestigungspunkt 5 ausgebildet und weist im Unterschied zu dem ersten Befestigungspunkt 5 Mittel zum Toleranzausgleich 19 auf. Das Mittel zum Toleranzausgleich 19 wird gebildet durch ein Langloch 20, das sich in horizontaler Richtung an einer zweiten Lasche 21 erstreckt. Das Langloch 20 dient zum einen als ein Festlegelement 10, das mit einem rechteckförmigen Stift 10' des Karosserieteils 4 zusammenwirkt. Zum anderen dient das Langloch 20 als eine Aufnahme (Befestigungselement), die mit einem Rastelement 22 des Karosserieteils 4 zusammenwirkt. Das Festlegelement 10 ist somit in dem Befestigungselement 20 integriert. Die Breite b des Langlochs 20 ist auf die Vertikalausdehnung des Stiftes 10' abgestimmt, so dass nach dem Ansetzen der zweiten Lasche 21 auf das Rastelement 22 bzw. auf den Stift 10' Toleranzunterschiede des Gehäuses 2 bzw. des Karosserieteils 4 in Längsrichtung des Langloches 20 berücksichtigt werden können. Die Befestigung der zweiten Lasche 21 erfolgt gleichwirkend zu der Befestigung der ersten Lasche 13. Im Unterschied zu dem ersten Befestigungspunkt 5 sind Rasthaken 23 des Rastelementes 22 flexibel um eine horizontale Achse angeordnet, so dass sie in der Ansatzposition bzw. Montageposition lange horizontale Kanten 24 des Langlochs 20 hintergreifen.

An einem unteren Rand des Gehäuses 2 ragen eine dritte Lasche 25 und eine vierte Lasche 26 ab, die gleichförmig mit einer rechteckförmigen Aufnahme 27 als Befestigungselement ausgebildet sind. Die Aufnahme 27 wirkt jeweils mit einem Rastelement 28 des Karosserieteils 4 zusammen. Die Rastelemente 28 weisen jeweils flexibel um eine vertikale Achse angeordnete zwei Rasthaken 29 auf. Nach Anlage der Laschen 25, 26 an der Grundfläche 16 des Karosserieteils 4 hintergreifen die Rasthaken 29 vertikale Kanten 30 der Aufnahme 27. Die Laschen 25, 26 bilden zusammen mit den Rastelementen 28 den vierten und fünften Befestigungspunkt 7, 8, wobei keine zusätzlichen Festlegelemente vorgesehen sind. Die vertikale Kante 30 und eine horizontale Kante 31 der Aufnahmen 27 weisen eine solche Länge auf, dass Toleranzunterschiede zwischen dem Gehäuse 2 und dem Karosserieteil 4 berücksichtigt werden.

Somit weisen lediglich die Befestigungspunkte 6, 7, 8 Mittel zum Toleranzausgleich 19 auf, wobei der zweite Befestigungspunkt 6 einen Toleranzausgleich in horizontaler Richtung und die beiden Befestigungspunkte 7 und 8 einen Toleranzausgleich sowohl in horizontaler als auch in vertikaler Richtung ermöglichen.

Die Laschen 13, 21, 25, und 26 erstrecken sich im wesentlichen in einer gemeinsamen Ebene. Sie sind verteilt entlang eines Randes des Gehäuses 2 angeordnet.

Nach einer alternativen Ausführungsform der Leuchteinheit 1 können auch lediglich drei Befestigungspunkte 5, 6, 7 vorgesehen sein unter Weglassung des vierten Befestigungspunktes 8.

Zur Montage der Leuchteinheit 1 an dem Karosserieteil 4 werden die Laschen 13, 21, 25 und 26 unter Zusammenwirken der Festlegelemente 9, 9', 10, 10' entlang eines durch die Achsen der Stifte 9', 10' vorgegebenen Führungsweges an die Grundfläche 16 des Karosserieteils 4 geführt, bis sie in der Ansatzposition gegen die Grundfläche 16 anstoßen. Während dieser Ansatzbewegung erfolgt ein Verrasten der den jeweiligen Laschen 13, 21, 25, 26 zugeordneten Befestigungselementen 14, 15, 22, 27, 28. Mit Erreichen der Ansatzposition der Laschen 13, 21, 25 und 26 haben diese auch die Befestigungsposition erreicht, so dass die Montage beendet ist.

Alternativ zu der oben beschriebenen Rastverbindung kann ein Formschluss auch durch beispielsweise Nieten hergestellt werden.

Nach einer weiteren alternativen Ausführungsform können die Laschen 13, 21, 25, 26 auch durch Kraftschluss mit dem Karosserieteil 4 verbunden sein. Beispielsweise kann die Verbindung durch eine Schrauben-Mutter-Verbindung hergestellt sein. Bei dieser Ausführungsform erfolgt die Montage in zwei Schritten. In einem ersten Schritt erfolgt das Verbringen der Laschen in eine Ansatzposition, in der - wie oben beschrieben - die Festlegelemente 9, 9' an dem Fixpunkt 5 passgenau gehalten sind. In einem zweiten Schritt erfolgt dann die Befestigung der Laschen durch eine Schraubverbindung.

## Patentansprüche

1. Leuchteinheit (1) für Fahrzeuge mit einem Gehäuse (2), das an mindestens drei zueinander beabstandeten Befestigungspunkten mit einem Karosserieteil verbindbar ist, wobei ein erster Befestigungspunkt (5) als Fixpunkt mit einem Festlegelement (9, 9') ausgebildet ist, derart, dass das Gehäuse (2) in einer Ansetzposition unversetzbar oder lediglich entgegen der erfolgten Ansetzbewegungsrichtung zu dem Karosserieteil (4) versetzbar ist, wobei ein zweiter Befestigungspunkt (6), einen Toleranzausgleich in einer einzigen Richtung ermöglicht, **dadurch gekennzeichnet, dass** der dritte Befestigungspunkt (7) Mittel zum Toleranzausgleich (19) entlang von zwei senkrecht zueinander angeordneten Achsen aufweist.

2. Leuchteinheit nach Anspruch 1, **dadurch gekennzeichnet, dass** zumindest Festlegelemente (9, 9', 10, 10') des Gehäuses (2) einerseits und des Karosserieteils (4) andererseits derart von dem Gehäuse (2) bzw. dem Karosserieteil (4) abragen, dass das Gehäuse (2) entlang eines durch die Form des Festlegelementes (9, 9', 10, 10') vorgegebenen Führungsweges in die Ansatzposition bringbar ist.

3. Leuchteinheit nach Anspruch 1 oder 2, **dadurch gekennzeichnet, dass** das dem Fixpunkt (5) zugeordnetes Festlegelement (9, 9') in der Nähe von Vorzugskanten des Gehäuses (2) und/oder des Karosserieteils (4) angeordnet ist.

4. Leuchteinheit nach einem der Ansprüche 1 bis 3, **dadurch gekennzeichnet, dass** das Festlegelement (9, 9') benachbart zu dem Befestigungselement (14, 15, 20, 22) angeordnet ist.

5. Leuchteinheit nach einem der Ansprüche 1 bis 4, **dadurch gekennzeichnet, dass** das Festlegelement (9') des Karosserieteils (4) als ein Stift ausgebildet ist, der mit dem als eine Bohrung ausgebildeten korrespondierenden Festlegelement (9) des Gehäuses (2) zusammenwirkt.

6. Leuchteinheit nach einem der Ansprüche 1 bis 5, **dadurch gekennzeichnet, dass** das Festlegelement (10) in das Befestigungselement (20) integriert angeordnet ist.

7. Leuchteinheit nach einem der Ansprüche 1 bis 6, **dadurch gekennzeichnet, dass** das einem Befestigungspunkt (6) zugeordnete Festlegelement und das demselben Befestigungspunkt zugeordnete Befestigungselement des Gehäuses (2) durch ein einziges Langloch (20) gebildet ist, in das das Befestigungselement (22) und/oder das Festlegelement (10') des Karosserieteils (4) eingreift zur formschlüssigen Verbindung.

8. Leuchteinheit nach einem der Ansprüche 1 bis 7, **dadurch gekennzeichnet, dass** das Gehäuse (2) mit dem Karosserieteil (4) an den jeweiligen Befestigungspunkten (5, 6, 7, 8) durch Rastverbindung fixierbar ist.

9. Verfahren zum Befestigen einer Leuchteinheit (1) an einem Karosserieteil (4) eines Fahrzeugs, wobei ein Gehäuse (2) der Leuchteinheit (1) an vorgegebenen Befestigungspunkten (5, 6, 7, 8) mit Befestigungselementen (14, 15, 20, 22, 27, 28) des Karosserieteils (4) verbunden werden, **dadurch gekennzeichnet, dass** gleichzeitig
- das Gehäuse (2) unter Kopplung eines Festlegelementes (9) des Gehäuses (2) mit dem Karosserieteil (4) an einem ersten Befestigungspunkt (5) in eine Ansetzposition verbracht wird, in der das Festlegelement (9) nicht verschieblich angeordnet ist, und
- dass das Gehäuse (2) an mindestens zwei weiteren Befestigungspunkten (6, 7) mittels Verbringen von Befestigungselementen (20, 22, 27, 28) in eine Befestigungsposition mit dem Karosserieteil (4) verbunden wird, wobei zum Toleranzausgleich der zweite Befestigungspunkt (6) in horizontaler Richtung und der dritte Befestigungspunkt (7) in horizontaler und vertikaler Richtung verstellbar angeordnet wird.

10. Verfahren nach Anspruch 9, **dadurch gekennzeichnet, dass** das Gehäuse (2) entlang einer durch die Form der Festlegelemente (9, 9') vorgegebenen geführten Bewegung in die Ansatzposition verbracht wird.

## Claims

1. Light unit (1) for vehicles having a shell (2) connectable to a vehicle body portion at three spaced-apart mounting points wherein a first mounting point (5) is provided in form of a fixed point with a locator element (9, 9') such that the shell (2) is not displaceable from a first-engagement position or is just displaceable opposite to the direction of a first-engagement movement relative to said body portion (4) and wherein a second mounting point (6) permits to achieve tolerance compensation in just one direction, **characterized by** the fact that the third mounting point (7) includes means for tolerance compensation (19) along two axes which are perpendicular to each other.

2. Light unit according to Claim 1, **characterized by** the fact that at least locator elements (9, 9', 10, 10') of the shell (2) on the one hand and of the body portion (4) on the other hand are arranged to protrude from said shell (2) an/or said body portion (4) in such a way that the shell (2) may be brought into its first-engagement position along a guideway determined by the shape of said locator element (9, 9', 10, 10').

3. Light unit according to Claim 1 or 2, **characterized by** the fact that the locator element (9, 9') allocated to said mounting point (5) is disposed near projecting edges of the shell (2) and/or the body portion (4).

4. Light unit according to any of the preceding Claims 1 to 3, **characterized by** the fact that the locator element (9, 9') is disposed adjacent to a fixing element (14, 15, 20, 22).

5. Light unit according to any of the preceding Claims 1 to 4, **characterized by** the fact that the locator element (9') of said body portion (4) is provided in form of a pin adapted to coact with the mating locator element (9) of the shell (2) which is provided in form of a bore.

6. Light unit according to any of the preceding Claims 1 to 5, **characterized by** the fact that said locator element (10) is integral with the fixing element (20).

7. Light unit according to any of the preceding Claims 1 to 6, **characterized by** the fact that the locator element allocated to a mounting point (6) and the fixing element of the shell (2) allocated to that same mounting point are provided in form of one single slot (20) for the fixing element (22) and/or the locator element (10') of said body portion (4) to engage in and to thereby provide a positive connection.

8. Light unit according to any of the preceding Claims 1 to 7, **characterized by** the fact that the shell (2) is fixable to said body portion (4) at the respective mounting points (5, 6, 7, 8) by snap locking.

9. Method for attaching a light unit (1) to a body portion (4) of a vehicle in which a shell (2) of the light unit (1) is connected to fixing elements (14, 15, 20, 22, 27, 28) of said body portion (4) at predetermined mounting points (5, 6, 7, 8), **characterized by** the fact that by coupling a locator element (9) of the shell (2) to a body portion (4) in a first mounting point (5) said shell (2) is brought into a first-engagement position from which the locator element (9) is not shiftable and
that simultaneously said shell (2) is connected to said body portion (4) by bringing fixing elements (20, 22, 27, 28) into a position for fixing to the body portion (4),
wherein for tolerance compensation the second mounting point is adjustable in horizontal and the third mounting point (7) in both horizontal and vertical direction.

10. Method according to Claim 9, **characterized by** the fact that said shell (2) is brought into its first-engagement position by a movement along a path determined by the shape of said locator elements (9, 9').

## Revendications

1. Unité d'éclairage (1) pour véhicules avec un boîtier (2) pouvant être relié à une pièce de carrosserie en au moins trois points de fixation situés à distance les uns des autres, un premier point (5) de fixation étant conçu comme un point fixe avec un élément fixateur (9, 9'), de telle sorte que le boîtier (2) ne peut pas être déplacé de sa position de placement ou qu'il peut être déplacer que dans la direction opposée à celle du mouvement de placement préalable par rapport à la pièce de carrosserie (4), un deuxième point de fixation (6) permettant une compensation de tolérances dans une seule direction, **caractérisée en ce que** le troisième point de fixation (7) présente des moyens pour une compensation de tolérances (19) le long de deux axes orthogonaux l'un par rapport à l'autre.

2. Unité d'éclairage selon la revendication 1, **caractérisée en ce que** des éléments fixateurs (9, 9', 10, 10') au moins du boîtier (2) d'une part et de la pièce de carrosserie (4) d'autre part sont conçus pour dépasser respectivement du boîtier (2) ou de la pièce de carrosserie (4), **en ce que** le boîtier (2) peut être mis dans la position de placement le long d'un chemin de guidage imposé par la forme de l'élément fixateur (9, 9', 10, 10').

3. Unité d'éclairage selon la revendication 1 ou 2, **caractérisée en ce que** l'élément fixateur (9, 9') associé au point fixe (5) est disposé à proximité des bords préférentiels du boîtier (2) et/ou de la pièce de carrosserie (4).

4. Unité d'éclairage selon l'une des revendications 1 à 3, **caractérisée en ce que** l'élément fixateur (9, 9') est disposé à proximité de l'élément de fixation (14, 15, 20, 22).

5. Unité d'éclairage selon l'une des revendications 1 à 4, **caractérisée en ce que** l'élément fixateur (9') de la pièce de carrosserie (4) a la forme d'un tenon qui coopère avec l'élément fixateur (9) correspondant du boîtier (2) conçu sous la forme d'un alésage.

6. Unité d'éclairage selon l'une des revendications 1 à 5, **caractérisée en ce que** l'élément fixateur (10) est intégré à l'élément de fixation (20).

7. Unité d'éclairage selon l'une des revendications 1 à 6, **caractérisée en ce que** l'élément fixateur associé à un point de fixation (6) et l'élément de fixation du boîtier (2) associé au même point de fixation sont formés par un seul trou long (20) dans lequel pénètre l'élément de fixation (22) et/ou l'élément fixateur (10') de la pièce de carrosserie (4) pour établir une liaison par forme.

8. Unité d'éclairage selon l'une des revendications 1 à 7, **caractérisée en ce que** le boîtier (2) peut être fixée à la pièce de carrosserie (4) à chacun des points de fixation (5, 6, 7, 8) par une liaison par encliquetage.

9. Procédé pour fixer une unité d'éclairage (1) sur une pièce de carrosserie (4) d'un véhicule, un boîtier (2) de l'unité d'éclairage (1) étant relié à des éléments de fixation (14, 15, 20, 22, 27, 28) de la pièce de carrosserie (4) à certains points de fixation prédéfinis (5, 6, 7, 8), **caractérisé en ce qu'**il est possible simultanément
- de mettre le boîtier (2) dans une position de placement en accouplant un élément fixateur (9) du boîtier (2) à une pièce de carrosserie (3) en un premier point de fixation (5), position dans laquelle l'élément fixateur (9) ne peut pas être délocalisé, et
- de relier le boîtier (2) en au moins deux autres points de fixation (6, 7) à la pièce de carrosserie (4), en mettant des éléments de fixation (20, 22, 27, 28) dans une position de fixation, le deuxième point de fixation (6) pouvant être déplacé horizontalement et le troisième point de fixation (7) horizontalement et verticalement pour compenser les tolérances.

10. Procédé selon la revendication 9, **caractérisé en ce que** le boîtier (2) peut être mis dans la position de placement par un mouvement imposé par la forme de l'élément fixateur (9, 9').
